# EUROPEAN PATENT SPECIFICATION

(11) **EP 3 751 668 B1**
(45) Date of publication and mention of the grant of the patent: **26.10.2022**
(21) Application number: 20177744.8
(22) Date of filing: 02.06.2020
(51) Int. Cl.: H01R 9/24, H01R 13/447, H02K 5/22, H01R 4/30, H01R 11/12

(54) **TERMINAL BLOCK DEVICE**
ANSCHLUSSBLOCKVORRICHTUNG
DISPOSITIF DE BLOC TERMINAL

(30) Priority: 14.06.2019 JP 2019111420
(43) Date of publication of application: 16.12.2020
(73) Proprietor: Kabushiki Kaisha Toyota Jidoshokki, Kariya-shi, Aichi 448-8671 (JP)
(72) Inventor: IMAI, Tsutomu, Kariya-shi, Aichi 448-8671 (JP); KOSAKI, Tomohiro, Kariya-shi, Aichi 448-8671 (JP)
(74) Representative: TBK

(56) References cited:
- JP-A- 2016 131 067
- JP-A- 2017 059 300
- US-A1- 2016 204 529

## Description

### 1. Field

The following description relates to a terminal block device.

### 2. Description of Related Art

Japanese Laid-Open Patent Publication No. 2017-59300 describes a conventional terminal block device.

The terminal block device is used to electrically connect first wires and second wires extending from a motor. A motor main body includes a stator and a rotor, which is rotated inside the stator. The stator includes a stator core and coils. A coil end of the coils is arranged at the two ends of the stator. The first wires extend from one of the coil ends. The rotor includes a rotor core and a rotation shaft, which is fixed to the rotor core and extended through the center of the rotor core.

The motor main body includes a front cover and a rear cover. In an axial direction of the rotation shaft, the motor main body is sandwiched between the front cover and the rear cover. The front cover and the rear cover form a fixing portion to which the stator is fixed. The coil ends at the two ends of the stator core are covered by the front cover and the rear cover.

The terminal block device is fastened to the front cover. The front cover serves as a seat to which the terminal block device is fastened. The front cover includes a space for insertion of the first wires extending from the stator. The terminal block device includes a terminal block and a terminal unit. The terminal block has a terminal block main body, which serves as a lower terminal block, and a cover body, which serves as an upper terminal block. The terminal unit electrically connects the first wires, which are inserted through the space and bent in the axial direction of the rotation shaft of the motor main body, and the second wires. The terminal block is formed from an insulative material. The terminal unit is arranged on the terminal block.

The terminal block main body is fastened to the front cover and includes an opening that is connected to the space in the front cover. The opening of the terminal block main body receives the first wires, which are inserted through the space. The terminal block main body includes a partition wall formed in correspondence with the opening. The partition wall is located between the front cover and the first wires, which are inserted through the space. The partition wall insulates the front cover and the first wires. The cover body covers the first wires extending out of the space. The cover body is fastened with the terminal block main body to the front cover by bolts. The terminal unit fastens crimp terminals on distal ends of the first wires to crimp terminals on distal ends of the second wires. The terminal unit electrically connects the first wires and the second wires and fixes the first wires in place relative to the terminal block device.

When fastening the terminal block device to the front cover, the terminal block main body is first coupled to the front cover so as to position the partition wall of the terminal block main body between the front cover and the first wires, which are inserted through the space. Then, the cover body is fastened to the front cover together with the terminal block main body.

The distance between the first wires and the partition wall may be decreased in an extension direction of the first wires, which extend out of the space toward the terminal unit. Consequently, the first wires may come into contact with the partition wall when fastening the cover body to the front cover together with the terminal block main body. Noise may be produced when the first wires are in contact with the partition wall. In the terminal block device described in the above document, a contact state of the first wires and the partition wall cannot be checked. Accordingly, there is a need for improvement that allows the contact state of the first wires and the partition wall to be checked.

US 2016/204529 A1 discloses a conventional terminal block device according to the preamble portion of claim 1 of the present invention. Further conventional terminal block devices are disclosed in JP 2017 059300A and JP 2016 131067 A.

### SUMMARY

### PROBLEM TO BE SOLVED BY THE INVENTION

It is an object of the present invention to provide a terminal block device that can easily be handled and coupled to a motor main body having wires installed.

### MEANS FOR SOLVING THE INVENTION

The object is achieved by a terminal block device having the features of claim 1. Advantageous further developments are set out in the dependent claims.

According to the present invention, the lower terminal block of the block device can easily be placed at its intended position with respect to the seat of the motor main body by moving it in an axial direction of the rotation shaft 27 and by moving it in an extension direction.

### BRIEF DESCRIPTION OF THE DRAWINGS

Fig. 1 is a perspective view showing a motor including a terminal block device in accordance with one embodiment.
Fig. 2 is a partially cross-sectional view of the motor.
Fig. 3 is an exploded perspective view of the terminal block device arranged on a motor main body.
Fig. 4 is an exploded perspective view of the terminal block device.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

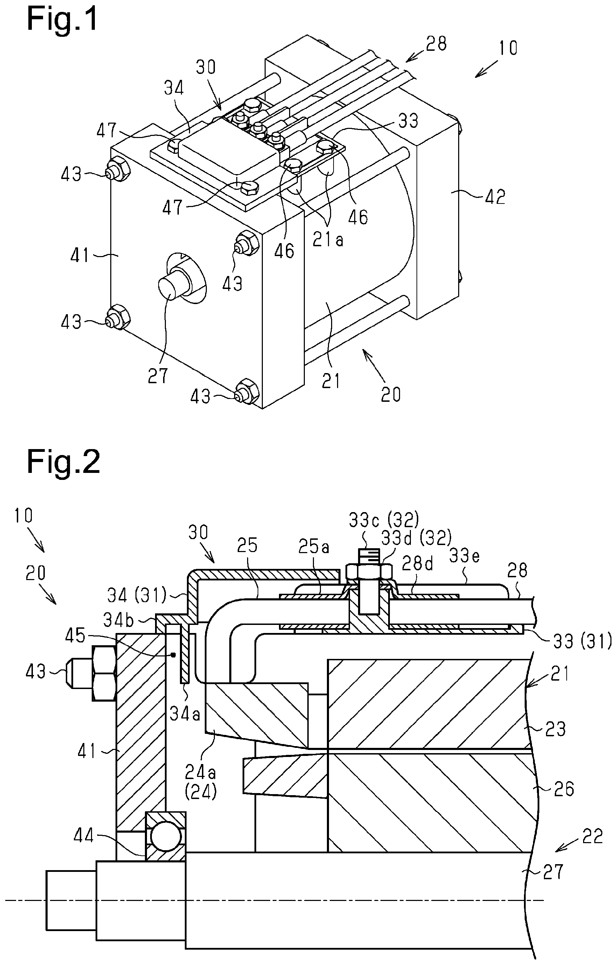

A terminal block device in accordance with one embodiment will now be described with reference to Figs. 1 to 4. The terminal block device of the present embodiment is applied to an electric motor, which is a three-phase induction motor. Thus, the structure of the electric motor will also be described in the present embodiment.

As shown in Fig. 1, an electric motor 10 includes a motor main body 20 and a terminal block device 30 that is arranged on the motor main body 20.

The motor main body 20 includes a stator 21. The stator 21 includes an outer circumferential surface on which support portions 21a are arranged to support and fix part of the terminal block device 30.

As shown in Fig. 2, the motor main body 20 includes a rotor 22 that is rotated inside the stator 21. The stator 21 includes a stator core 23 and coils 24. Coil ends 24a of the coils 24 are formed at two ends of the stator core 23. First wires 25 extend from the coil end 24a at one of the two ends of the stator core 23. The rotor 22 includes a rotor core 26 and a rotation shaft 27, which is fixed to the rotor core 26 and extended through the center of the rotor core 26. Fig. 2 only shows the coil end 24a at one of the two ends of the stator core 23.

As shown in Fig. 1, the motor main body 20 includes a front cover 41 and a rear cover 42. In an axial direction of the rotation shaft 27 of the electric motor 10, the stator 21 is sandwiched between the front cover 41 and the rear cover 42. The front cover 41 and the rear cover 42 each have the form of a quadrangle block. The front cover 41 and the rear cover 42 are each fastened by four through bolts 43 to the stator 21. The front cover 41 and the rear cover 42 form a fixing portion to which the stator 21 is fixed.

The terminal block device 30 is fastened to the front cover 41, which is part of the motor main body 20, by bolts 47. Specifically, the terminal block device 30 is fastened to the front cover 41, which is part of the fixing portion, by the bolts 47. Further, the terminal block device 30 is fastened to the support portions 21a, which are arranged on the outer circumferential surface of the stator 21, by bolts 46. The terminal block device 30 is first fastened to the support portions 21a of the stator 21 by the bolts 46 and then fastened to the front cover 41 by the bolts 47. This fastens the terminal block device 30 to the motor main body 20.

As shown in Fig. 2, the front cover 41 covers the coil end 24a arranged at one of the two ends of the stator core 23. The rotation shaft 27 of the rotor 22 extends through the front cover 41. The rotation shaft 27 is rotatably supported on the front cover 41 by a bearing 44. The front cover 41 includes a space 45 for insertion of the first wires 25 extending from the stator 21 (stator core 23). Although not shown in the drawings, the rear cover 42 covers the coil end 24a arranged at the other one of the two ends of the stator core 23. Also, the rotation shaft 27 of the rotor 22 is rotatably supported on the rear cover 42 by a bearing. Further, the space 45 may be a cutout formed in the end of the stator 21 at the side of the coil end 24a. When the space 45 is defined in the stator 21, the stator 21 serves as one example of a seat.

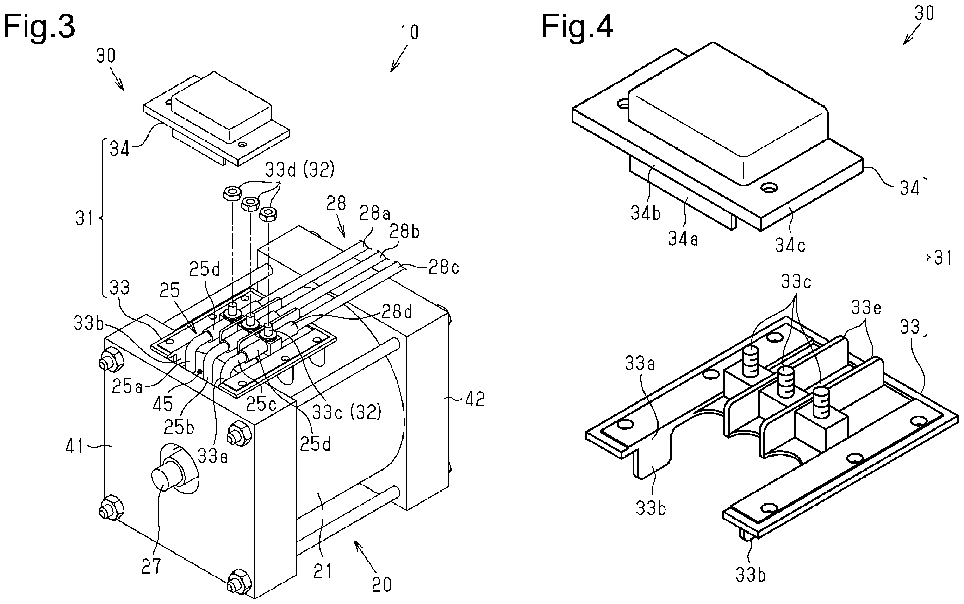

As shown in Fig. 3, the first wires 25 inserted through the space 45 in the front cover 41 include three wires 25a, 25b, and 25c. Specifically, the wire 25a is connected to a U-phase of the electric motor 10. The wire 25b is connected to a V-phase of the electric motor 10. The wire 25c is connected to a W-phase of the electric motor 10. The three wires 25a, 25b, and 25c each include a distal end where a crimp terminal 25d is arranged.

The terminal block device 30 is used to electrically connect the first wires 25 and second wires 28, which are connected to an external device. The second wires 28 include three wires 28a, 28b, and 28c that are electrically connected to the wires 25a, 25b, and 25c of the first wires 25, respectively. The three wires 28a, 28b, and 28c each include a distal end where a crimp terminal 28d is formed. The three wires 25a, 25b, and 25c, which are the first wires 25, and the three wires 28a, 28b, and 28c, which are the second wires 28, are each formed by, for example, a conductive wire and a tube. The conductive wire is formed by a conductive member. The tube is formed from a resin or the like and encloses the conductive wire. The distal ends of the wires 25a, 25b, 25c, 28a, 28b, and 28c are not covered by the tube. That is, the wires 25a, 25b, 25c, 28a, 28b, and 28c each include a conductive wire, and the distal end of the conductive wire is not covered by the tube and exposed to the outside. The crimp terminals 25d and 28d are arranged on the exposed parts of the conductive wires of the corresponding wires 25a, 25b, 25c, 28a, 28b, and 28c.

As shown in Figs. 3 and 4, the terminal block device 30 includes a terminal block 31 and a terminal unit 32. The terminal block 31 is formed from an insulative material and coupled to the front cover 41, which serves as the seat. The terminal block 31 includes a lower terminal block 33 formed from an insulative material and an upper terminal block 34 formed from an insulative material. The lower terminal block 33 and the upper terminal block 34 are, for example, formed from an insulative nylon (PA66).

The lower terminal block 33 has the form of a plate. The front cover 41, which is part of the motor main body 20 and serves as the seat, includes the space 45 for insertion of the first wires 25. The lower terminal block 33 includes an opening 33a that is connected to the space 45. The opening 33a extends through the lower terminal block 33 in a plate-thickness direction and is U-shaped so as to open in the axial direction of the rotation shaft 27 in a state in which the lower terminal block 33 is placed on the front cover 41. The first wires 25, which are inserted through the space 45 in the front cover 41 and the opening 33a of the lower terminal block 33, are bent in the axial direction of the rotation shaft 27 of the motor main body 20. The first wires 25 extend through the space 45 and the opening 33a and then extend toward the rear cover 42 in the axial direction of the rotation shaft 27. The lower terminal block 33 includes two insulation portions 33b. The two insulation portions 33b project toward the space 45 in the front cover 41 from portions of the edges of the opening 33a in the lower terminal block 33 that are arranged in a direction orthogonal to the extension direction of the first wires 25. When the lower terminal block 33 is fastened to the seat (specifically, front cover 41), the insulation portions 33b are located between the seat (specifically, front cover 41) and the first wires 25. The insulation portions 33b and the first wires 25 are arranged next to each other in the space 45 in the direction orthogonal to the extension direction of the first wires 25. In a state in which the lower terminal block 33 is fastened to the front cover 41 (refer to Fig. 1), the two insulation portions 33b contact the front cover 41 in a state inserted in the space 45. Specifically, the first wires 25 inserted through the space 45, the two insulation portions 33b, and the front cover 41 are arranged next to one another in the direction orthogonal to the extension direction of the first wires 25. Further, the two insulation portions 33b are located between the first wires 25 and the front cover 41. Thus, the two insulation portions 33b insulate the first wires 25 from the front cover 41 in the direction orthogonal to the extension direction of the first wires 25.

The lower terminal block 33 includes support pins 33c arranged adjacent to the opening 33a. The support pins 33c are arranged in the direction orthogonal to the extension direction of the first wires 25. The support pins 33c project from the surface of the lower terminal block 33 located at the opposite side of the stator 21. The support pins 33c are electrically connected to the crimp terminals 25d, which are arranged on the three wires 25a, 25b, and 25c serving as the first wires 25. Further, the support pins 33c are electrically connected to the crimp terminals 28d, which are each arranged on the three wires 28a, 28b, and 28c serving as the second wires 28. A male thread is formed in the distal end of each support pin 33c. In a state in which the crimp terminals 25d and 28d are electrically connected to the support pins 33c, nuts 33d are fastened to the distal ends of the support pins 33c. As shown in Fig. 2, this keeps the crimp terminals 25d of the first wires 25 and the crimp terminals 28d of the second wires 28 compressed with the nuts 33d to electrically connect the first wires 25 and the second wires 28. Further, the support pins 33c and the nuts 33d position the first wires 25 relative to the terminal block device 30.

The terminal unit 32 of the terminal block device 30 includes the support pins 33c and the nuts 33d. Thus, the terminal unit 32, which is arranged on the terminal block 31, electrically connects the first wires 25, which are bent in the axial direction of the rotation shaft 27 of the motor main body 20, and the second wires 28. As shown in Fig. 4, two insulation walls 33e extending in the extension direction of the first wires 25 are arranged on the upper surface of the lower terminal block 33. The two insulation walls 33e insulate the three wires 25a, 25b, and 25c from one another and the three wires 28a, 28b, and 28c from one another in the direction orthogonal to the extension direction of the first wires 25.

As shown in Fig. 1, the lower terminal block 33 and the upper terminal block 34 are coupled to the front cover 41 by the bolts 47, which serve as fasteners. That is, the lower terminal block 33 and the upper terminal block 34 are coupled to the front cover 41, which serves as the seat, by the bolts 47, which serve as common fasteners. This fastens the lower terminal block 33 and the upper terminal block 34 to the front cover 41.

As shown in Fig. 2, the upper terminal block 34 is arranged to cover the first wires 25 extending out of the space 45 of the front cover 41. In the axial direction of the rotation shaft 27, a length of the portion of the upper terminal block 34 that covers the first wires 25 is shorter than a length from the front cover 41 to the terminal unit 32. Thus, in a state in which the first wires 25 are covered by the upper terminal block 34, the terminal unit 32 is not covered by the upper terminal block 32.

A partition wall 34a is arranged on the upper terminal block 34. The partition wall 34a is formed integrally with the upper terminal block 34. The partition wall 34a is located between the first wires 25, which are inserted through the space 45, and the front cover 41 in the extension direction of the first wires 25, which extend out of the space 45 in the front cover 41 toward the terminal unit 32. In other words, the front cover 41, the partition wall 34a, and the first wires 25 are arranged in the extension direction of the first wires 25 so that the partition wall 34a is located between the front cover 41 and the first wires 25, which are inserted through the space 45.

As shown in Figs. 2 and 4, a first flange portion 34b extends along the edge of the upper terminal block 34 at the side of the front cover 41 in the extension direction of the first wires 25. When the lower terminal block 33 and the upper terminal block 34 are fastened to the front cover 41, the first flange portion 34b contacts the lower terminal block 33 so as to cover the edge of the lower terminal block 33. Further, second flange portions 34c extend along the edges of the upper terminal block 34 arranged in the direction orthogonal to the extension direction of the first wires 25. When the lower terminal block 33 and the upper terminal block 34 are fastened to the front cover 41, the second flange portions 34c contact the lower terminal block 33 so as to cover the edges of the lower terminal block 33. That is, when fastening the upper terminal block 34 to the lower terminal block 33 and the front cover 41, the upper terminal block 34 is fitted to the lower terminal block 33 so as to cover the lower terminal block 33. Further, the first flange portion 34b positions the upper terminal block 34 relative to the lower terminal block 33 in the extension direction of the first wires 25, and the second flange portions 34c position the upper terminal block 34 relative to the lower terminal block 33 in the direction orthogonal to the extension direction of the first wires 25. The first flange portion 34b and the second flange portions 34c form a flange.

The present embodiment has the following advantages.
(1) In the present embodiment, the lower terminal block 33 is coupled to the front cover 41 and then the upper terminal block 34 is disposed to cover the first wires 25 so that the first wires 25 are inserted through the space 45 in the front cover 41 and the opening 33a of the lower terminal block 33. Subsequently, the lower terminal block 33 and the upper terminal block 34 are fastened to the front cover 41. When the upper terminal block 34 is fastened together with the lower terminal block 33 to the front cover 41, the partition wall 34a of the upper terminal block 34 is inserted into the space 45 of the front cover 41. In this case, the upper terminal block 34 can be coupled together with the lower terminal block 33 to the front cover 41 while checking a contact state of the partition wall 34a and the first wires 25, which are inserted through the space 45. Accordingly, the assembling can be performed while checking the contact state of the partition wall 34a and the first wires 25. Further, the space 45 has a greater volume before the partition wall 34a of the upper terminal block 34 is inserted into the space 45 than after the partition wall 34a of the upper terminal block 34 is inserted into the space 45. Thus, before the partition wall 34a of the upper terminal block 34 is inserted into the space 45, the first wires 25 can be easily laid out when assembling the motor.
(2) When the upper terminal block 34 is coupled to the front cover 41 with the first wires 25 inserted through the space 45 in the front cover 41 and the opening 33a of the lower terminal block 33, the partition wall 34a is likely to come into contact with the first wires 25 if the upper terminal block 34 is displaced relative to the lower terminal block 33.
   In this respect, in the present embodiment, when the lower terminal block 33 and the upper terminal block 34 are fastened to the front cover 41, the first flange portion 34b and the second flange portions 34c of the upper terminal block 34 contact the lower terminal block 33 so as to cover the edges of the lower terminal block 33. This fixes the upper terminal block 34 in place relative to the lower terminal block 33. Accordingly, the possibility of the first wires 25 coming into contact with the partition wall 34a is lowered.
(3) In the present embodiment, the upper terminal block 34 and the lower terminal block 33 are coupled to the front cover 41 by the bolts 47, which serve as common fasteners. This facilitates the coupling of the upper terminal block 34 and the lower terminal block 33.
(4) In the present embodiment, in a state in which the lower terminal block 33 is fastened to the front cover 41, the insulation portions 33b project toward the space 45 from the portions of the edges of the opening 33a in the lower terminal block 33 that are arranged in the direction orthogonal to the extension direction of the first wires 25. This further lowers the possibility of the first wires 25 coming into contact with the front cover 41.
(5) In recent years, there is a need for reduction in the size of the electric motor 10. When the size of the electric motor 10 is reduced, the first wires 25 are shortened. When the first wires 25 are shortened, it becomes more difficult to maintain the first wires 25, which are inserted through the space 45 and the opening 33a, in a state bent in the axial direction of the rotation shaft 27.

In this respect, the terminal block device 30 of the present embodiment includes the terminal unit 32. The terminal unit 32 electrically connects the first wires 25 and the second wires 28. Further, the terminal unit 32 positions the first wires 25 relative to the terminal block device 30. In this manner, even when the electric motor 10 is reduced in size, the terminal unit 32 can adequately maintain the first wires 25 in a state bent in the axial direction of the rotation shaft 27.

(6) Further, as described in advantage (5), the distance between the first wires 25 and the front cover 41 may be decreased when the electric motor 10 is reduced in size. In this case, when arranging the partition wall 34a of the upper terminal block 34 of the present embodiment between the front cover 41 and the first wires 25, which are inserted through the space 45 and the opening 33a, the partition wall 34a may make strong contact with the first wires 25.

In this respect, in the present embodiment, the terminal block device 30 can be manufactured while checking the contact state of the partition wall 34a and the first wires 25 as described in advantage (1). This allows one to use his or her tactile perception to check the degree of contact between the partition wall 34a and the first wires 25 when arranging the partition wall 34a between the first wires 25 and the front cover 41. Therefore, one can manufacture the terminal block device 30 while adjusting the force added to couple the upper terminal block 34 to the front cover 41.

(7) As described in advantage (1), the terminal block device 30 can be manufactured while checking the contact state of the partition wall 34a and the first wires 25. Thus, one can manufacture the terminal block device 30 while checking that the first wires 25 are insulated from the front cover 41. This improves safety of the terminal block device 30.

(8) The upper terminal block 34 and the lower terminal block 33 are coupled to the front cover 41, which serves as the seat and is part of the motor main body 20, by the bolts 47, which serve as the common fasteners. When coupling the upper terminal block 34, the lower terminal block 33 is fastened in advance to the support portions 21a of the stator 21 by the bolts 46. When coupling the upper terminal block 34, the position of the lower terminal block 33 is determined in advance. Thus, by fastening the upper terminal block 34, the lower terminal block 33 is also fastened. This facilitates coupling of the lower terminal block 33 and the upper terminal block 34. Further, the number of the bolts used can be decreased as compared to when the lower terminal block 33 and the upper terminal block 34 are fastened by separate bolts.

The present embodiment may be modified as follows. The present embodiment and the following modifications can be combined as long as the combined modifications remain technically consistent with each other.

The upper terminal block 34 includes a flange formed by the first flange portion 34b and the second flange portions 34c. However, there is no limitation to such a configuration. The flange may be formed by only the first flange portion 34b. This will also position the upper terminal block 34 relative to the lower terminal block 33 in the extension direction of the first wires 25. Further, the upper terminal block 34 that does not have to include the first flange portion 34b and the second flange portions 34c.

The lower terminal block 33 and the upper terminal block 34 are formed from an insulative nylon. However, the lower terminal block 33 and the upper terminal block 34 may be formed from a resin or the like having a typical insulation property.

Further, for improved durability, the lower terminal block 33 and the upper terminal block 34 may use graphite GF30 or the like, which is a resin including glass fibers.

The front cover 41 and the rear cover 42 serves as one example of the fixing portion. Instead, for example, a housing of the motor main body 20 may serve as the fixing portion. In this case, the stator 21 may be fixed to an inner surface of the housing. Preferably, a space for insertion of the first wires 25 is defined in a wall portion of the housing to which the stator 21 is fixed. Further, the terminal block 31 is fixed to the wall portion of the housing in which the space is defined. That is, the wall portion of the housing is part of the fixing portion and forms the seat to which the terminal block 31 is fastened.

In the present embodiment, the upper terminal block 34 covers the first wires 25 and does not cover the terminal unit 32. However, the portion in the upper terminal block 34 that covers the first wires 25 may be longer than the length from the front cover 41 to the terminal unit 32 so that the upper terminal block 34 covers the terminal unit 32. The location of the electric motor 10 may be taken into consideration to determine whether to cover the terminal unit 32 with the upper terminal block 34. For example, when the electric motor 10 is applied to a vehicle and arranged at a position where water or the like may collect, the upper terminal block 34 may be configured to cover the first wires 25 and the terminal unit 32. When the electric motor 10 is applied to a vehicle and arranged at a position where water or the like will not collect on the electric motor 10, the upper terminal block 34 may cover the first wires 25 without covering the terminal unit 32.

In the present embodiment, the lower terminal block 33 includes the two insulation portions 33b. However, the two insulation portions 33b may be omitted. In this case, the distance between the first wires 25 and the front cover 41 may be long enough to sufficiently provide insulation between the first wires 25 and the front cover 41 in the direction orthogonal to the extension direction of the first wires 25, which extend out of the space 45 toward the terminal unit 32.

The insulation portions 33b of the lower terminal block 33 may be formed to insulate the first wires 25 from the stator 21 in the direction orthogonal to the extension direction of the first wires 25.

The bolts 47 are employed to fasten the lower terminal block 33 and the upper terminal block 34 to the front cover 41, but there is no limitation to such a structure. For example, the fastener may be formed by a snap pin and a rod, which is fixed to the front cover 41 extending through the lower terminal block 33 and the upper terminal block 34. In this modified example, a hole extends through the rod of the fastener in a radial direction, which is orthogonal to its axial direction. The rod is fixed to the front cover 41 so that the hole of the rod is located over the upper surface of the upper terminal block 34. Then, the snap pin is inserted through the hole of the rod. This fixes the lower terminal block 33 and the upper terminal block 34 on the front cover 41. The snap pin may be changed to a rod-shaped member configured to be inserted through the hole of the rod. This also couples the upper terminal block 34 and the lower terminal block 33 to the front cover 41 with a common fastener.

In the present embodiment and the above modified examples, the upper terminal block 34 and the lower terminal block 33 may be fastened to the front cover 41 by separate fasteners instead of fastening the upper terminal block 34 and the lower terminal block 33 to the front cover 41 with a common fastener.

The terminal block device 30 is fastened to the support portions 21a of the stator 21 by the bolts 46, but there is no limitation to such a configuration. Instead of the bolts 46, the fastener of the above modified example may be employed.

The terminal unit 32 is formed by the support pins 33c and the nuts 33d, but there is no limitation to such a configuration. For example, bolts and the nuts 33d may form the terminal unit 32. The terminal unit 32 may be changed in any manner as long as the terminal unit 32 electrically connects the first wires 25 and the second wires 28 and position the first wires 25 relative to the terminal block device 30.

The opening 33a does not have to be U-shaped, and may be open in the axial direction of the rotation shaft 27 in a state in which the opening 33a extends through the lower terminal block 33 in a plate-thickness direction and the lower terminal block 33 is placed on the front cover 41. In this case, the insulation portions 33b may be formed not to insulate the first wires 25 from the front cover 41 in the direction orthogonal to the extension direction of the first wires 25. This facilitates assembly of the motor.

In a state in which the upper terminal block 34 covers the first wires 25, the terminal unit 32 does not have to be covered with the upper terminal block 34.

In addition to the above-described vehicle, the electric motor 10 may be applied to any unit that uses power generated by the electric motor 10.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure

A terminal block device is coupled to a seat. The seat includes a space for insertion of a first wire. The terminal block device includes a terminal block, which is coupled to the seat, and a terminal unit, which is arranged on the terminal block. The terminal block includes a lower terminal block and an upper terminal block. The upper terminal block includes a partition wall. A direction in which the first wire extends out of the space toward the terminal unit is an extension direction of the first wire. The seat, the partition wall, and the first wire are arranged next to one another in the extension direction so that the partition wall is located between the seat and the first wire inserted through the space.

## Claims

1. A terminal block device (30) configured to be coupled to a seat (41) that is part of a motor main body (20), wherein the seat (41) includes a space (45) for insertion of a first wire (25), the first wire (25) extends through the space (45) and is then bent to extend in an axial direction of a rotation shaft (27) of the motor main body (20), the terminal block device (30), comprising:
a terminal block (31) formed from an insulative material and configured to be coupled to the seat (41); and
a terminal unit (32) arranged on the terminal block (31) and configured to electrically connect the first wire (25) and a second wire (28), wherein
the terminal block (31) includes a lower terminal block (33) and an upper terminal block (34) which is configured to cover the first wire (25) extending out of the space (45),
when the terminal block device (30) is coupled to the motor main body (20), a direction in which the first wire (25) extends out of the space (45) toward the terminal unit (32) is an extension direction of the first wire (25), and
the terminal block device (30) is configured such that, when it is coupled to the motor main body (20), the seat (41), a partition wall (34a), and the first wire (25) are arranged next to one another in the extension direction so that the partition wall (34a) is located between the seat (41) and the first wire (25) inserted through the space (45), **characterized in that**
the upper terminal block (34) includes the partition wall (34a), and
the lower terminal block (33) includes an opening (33a) open in the axial direction of the rotation shaft (27), wherein the opening (33a) is configured to be connected to the space (45) when the lower terminal block (33) is fastened to the seat (41).

2. The terminal block device (30) according to claim 1, wherein a flange portion (34b and 34c) is arranged on an edge of the upper terminal block (34) so as to contact and cover an edge of the lower terminal block (33) when the lower terminal block (33) and the upper terminal block (34) are fastened to the seat (41).

3. The terminal block device (30) according to claim 1 or 2, wherein the upper terminal block (34) and the lower terminal block (33) are configured to be coupled to the seat (41) by a common fastener (47).

4. The terminal block device (30) according to any one of claims 1 to 3, wherein in a state in which the lower terminal block (33) is fastened to the seat (41), an insulation portion (33b) projects toward the space (45) from a portion of an edge of the opening (33a) in the lower terminal block (33) that is arranged in a direction orthogonal to the extension direction of the first wire (25).

5. The terminal block device (30) according to any one of claims 1 to 3, wherein
an insulation portion (33b) is arranged on an edge of the opening (33a) in the lower terminal block (33),
when the lower terminal block (33) is fastened to the seat (41), the insulation portion (33b) is located between the seat (41) and the first wire (25), and the insulation portion (33b) and the first wire (25) are arranged next to each other in the space (45) in a direction orthogonal to the extension direction of the first wire (25).

## Patentansprüche

1. Anschlussblockvorrichtung (30), die gestaltet ist, um mit einer Aufnahme (41) gekoppelt zu werden, die Teil eines Motorhauptkörpers (20) ist, wobei die Aufnahme (41) einen Raum (45) zum Einführen eines ersten Kabels (25) aufweist, wobei sich das erste Kabel (25) durch den Raum (45) erstreckt und dann gebogen wird, um sich in einer axialen Richtung einer Drehwelle (27) des Motorhauptkörpers (20) zu erstrecken, wobei die Anschlussblockvorrichtung (30) Folgendes aufweist:
einen Anschlussblock (31), der aus einem isolierenden Material gebildet ist und gestaltet ist, um an die Aufnahme (41) gekoppelt zu werden; und
eine Anschlusseinheit (32), die an dem Anschlussblock (31) angeordnet und gestaltet ist, um das erste Kabel (25) und ein zweites Kabel (28) elektrisch zu verbinden, wobei
der Anschlussblock (31) einen unteren Anschlussblock (33) und einen oberen Anschlussblock (34) enthält, der so gestaltet ist, dass er das erste Kabel (25) abdeckt, das sich aus dem Raum (45) erstreckt,
wenn die Anschlussblockvorrichtung (30) an den Motorhauptkörper (20) gekoppelt ist, eine Richtung, in der sich das erste Kabel (25) aus dem Raum (45) in Richtung der Anschlusseinheit (32) erstreckt, eine Verlängerungsrichtung des ersten Kabels (25) ist, und
die Anschlussblockvorrichtung (30) so gestaltet ist, dass, wenn sie an den Motorhauptkörper (20) gekoppelt ist, die Aufnahme (41), eine Trennwand (34a) und das erste Kabel (25) in der Verlängerungsrichtung nebeneinander angeordnet sind, so dass sich die Trennwand (34a) zwischen der Aufnahme (41) und dem durch den Raum (45) eingeführten ersten Kabel (25) befindet,
**dadurch gekennzeichnet, dass**
der obere Anschlussblock (34) die Trennwand (34a) beinhaltet, und der untere Anschlussblock (33) eine Öffnung (33a) beinhaltet, die in der axialen Richtung der Drehwelle (27) offen ist, wobei die Öffnung (33a) gestaltet ist, um mit dem Raum (45) verbunden zu sein, wenn der untere Anschlussblock (33) an der Aufnahme (41) befestigt ist.

2. Anschlussblockvorrichtung (30) nach Anspruch 1, wobei ein Flanschabschnitt (34b und 34c) an einer Kante des oberen Anschlussblocks (34) so angeordnet ist, dass er eine Kante des unteren Anschlussblocks (33) berührt und abdeckt, wenn der untere Anschlussblock (33) und der obere Anschlussblock (34) an der Aufnahme (41) befestigt sind.

3. Anschlussblockvorrichtung (30) nach Anspruch 1 oder 2, wobei der obere Anschlussblock (34) und der untere Anschlussblock (33) so gestaltet sind, dass sie durch ein gemeinsames Befestigungselement (47) an die Aufnahme (41) gekoppelt sind.

4. Anschlussblockvorrichtung (30) nach einem der Ansprüche 1 bis 3, wobei in einem Zustand, in dem der untere Anschlussblock (33) an der Aufnahme (41) befestigt ist, sich ein Isolationsabschnitt (33b) von einem Abschnitt einer Kante der Öffnung (33a) in dem unteren Anschlussblock (33), der in einer Richtung senkrecht zu der Erstreckungsrichtung des ersten Kabels (25) angeordnet ist, in Richtung des Raums (45) vorsteht.

5. Anschlussblockvorrichtung (30) nach einem der Ansprüche 1 bis 3, wobei
ein Isolationsabschnitt (33b) an einer Kante der Öffnung (33a) in dem unteren Anschlussblock (33) angeordnet ist,
wenn der untere Anschlussblock (33) an der Aufnahme (41) befestigt ist, sich der Isolationsabschnitt (33b) zwischen der Aufnahme (41) und dem ersten Kabel (25) befindet und der Isolationsabschnitt (33b) und das erste Kabel (25) in dem Raum (45) in einer Richtung senkrecht zu der Erstreckungsrichtung des ersten Kabels (25) nebeneinander angeordnet sind.

## Revendications

1. Dispositif de bloc terminal (30) configuré pour être couplé à un siège (41) qui fait partie d'un corps principal de moteur (20), le siège (41) incluant un espace (45) pour l'insertion d'un premier fil (25), le premier fil (25) s'étendant à travers l'espace (45) et étant ensuite plié pour s'étendre dans une direction axiale d'un arbre de rotation (27) du corps principal de moteur (20), le dispositif de bloc terminal (30) comprenant :
un bloc terminal (31) formé à partir d'un matériau isolant et configuré pour être couplé au siège (41) ; et
une unité terminale (32) agencée sur le bloc terminal (31) et configurée pour connecter électriquement le premier fil (25) et un deuxième fil (28),
le bloc terminal (31) incluant un bloc terminal inférieur (33) et un bloc terminal supérieur (34) qui est configuré pour couvrir le premier fil (25) s'étendant hors de l'espace (45),
lorsque le dispositif de bloc terminal (30) est couplé au corps principal de moteur (20), une direction dans laquelle le premier fil (25) s'étend hors de l'espace (45) vers l'unité terminale (32) est une direction d'extension du premier fil (25), et
le dispositif de bloc terminal (30) est configuré de telle sorte que, lorsqu'il est couplé au corps principal de moteur (20), le siège (41), une paroi de séparation (34a), et le premier fil (25) soient agencés l'un à côté de l'autre dans la direction d'extension de sorte que la paroi de séparation (34a) soit située entre le siège (41) et le premier fil (25) inséré à travers l'espace (45), **caractérisé en ce que**
le bloc terminal supérieur (34) inclut la paroi de séparation (34a), et le bloc terminal inférieur (33) inclut une ouverture (33a) ouverte dans la direction axiale de l'arbre de rotation (27), l'ouverture (33a) étant configurée pour être raccordée à l'espace (45) lorsque le bloc terminal inférieur (33) est assujetti au siège (41).

2. Dispositif de bloc terminal (30) selon la revendication 1, dans lequel une portion bride (34b et 34c) est agencée sur un bord du bloc terminal supérieur (34) de façon à entrer en contact et à couvrir un bord du bloc terminal inférieur (33) lorsque le bloc terminal inférieur (33) et le bloc terminal supérieur (34) sont assujettis au siège (41).

3. Dispositif de bloc terminal (30) selon la revendication 1 ou la revendication 2, dans lequel le bloc terminal supérieur (34) et le bloc terminal inférieur (33) sont configurés pour être couplés au siège (41) par un dispositif d'assujettissement commun (47).

4. Dispositif de bloc terminal (30) selon l'une quelconque des revendications 1 à 3, dans lequel, dans un état dans lequel le bloc terminal inférieur (33) est assujetti au siège (41), une portion d'isolation (33b) fait saillie vers l'espace (45) à partir d'une portion d'un bord de l'ouverture (33a) dans le bloc terminal inférieur (33) qui est agencé dans une direction orthogonale à la direction d'extension du premier fil (25).

5. Dispositif de bloc terminal (30) selon l'une quelconque des revendications 1 à 3, dans lequel
une portion d'isolation (33b) est agencée sur un bord de l'ouverture (33a) dans le bloc terminal inférieur (33),
lorsque le bloc terminal inférieur (33) est assujetti au siège (41), la portion d'isolation (33b) est située entre le siège (41) et le premier fil (25), et la portion d'isolation (33b) et le premier fil (25) sont agencés l'un à côté de l'autre dans l'espace (45) dans une direction orthogonale à la direction d'extension du premier fil (25).
